# EUROPEAN PATENT APPLICATION

(11) **EP 4 418 578 A1**
(43) Date of publication of application: **21.08.2024**
(21) Application number: 24153611.9
(22) Date of filing: 24.01.2024
(51) Int. Cl.: H04L 1/00, H04W 28/18, H04W 72/1268

(54) **ENHANCED UPLINK CONFIGURED GRANT**

(30) Priority: 15.02.2023 US 202318110266
(71) Applicant: Nokia Technologies Oy, 02610 Espoo (FI)
(72) Inventor: LI, Zexian, Espoo (FI); SAEED, Umar, Espoo (FI); PEDERSEN, Klaus Ingemann, Aalborg (DK); MOREJON GARCIA, Carlos Santiago, Aalborg (DK); PARIS, Stefano, Vanves (FR); SEBIRE, Benoist Pierre, Tokyo (JP)
(74) Representative: Nokia EPO representatives

(57) **Abstract**

Enhanced uplink configured grant for extended reality applications is provided. A method for enhanced uplink configured grant for extended reality applications may include configuring at least one first transmission of a plurality of transmissions by a user equipment with a transmission parameter having a first value. The method may also include configuring the user equipment with at least one rule configured to change the first value of the transmission parameter to a second value of the transmission parameter that is applied to at least one second transmission of the plurality of transmissions, which is used for a new data transmission.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to enhanced uplink (UL) configured grant.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments may provide an apparatus including at least one processor and at least one memory storing instructions. The stored instructions, when executed by the at least one processor, cause the apparatus at least to configure at least one first transmission of a plurality of transmissions by a user equipment with a transmission parameter having a first value. The apparatus may also be caused to configure the user equipment with at least one rule configured to change the first value of the transmission parameter to a second value of the transmission parameter that is applied to at least one second transmission of the plurality of transmissions, which is used for a new data transmission.

Certain exemplary embodiments may provide an apparatus including at least one processor and at least one memory storing instructions. The stored instructions, when executed by the at least one processor, cause the apparatus at least to transmit at least one first transmission of a plurality of transmissions according to a transmission parameter having a first value. The transmission parameter may be configured by a network entity. The apparatus may also be caused to apply at least one rule configured to change the first value of the transmission parameter to a second value of the transmission parameter, and transmit at least one second transmission of the plurality of transmissions, which is used for a new data transmission, according to the second value of the transmission parameter.

### BRIEF DESCRIPTION OF THE DRAWINGS:

For proper understanding of example embodiments, reference should be made to the accompanying drawings, as follows:
FIG. 1 illustrates an example of multiple configured grant (CG) physical uplink shared channel (PUSCH) resources/occasions within one CG period;
FIG. 2 illustrates an example of an XR implementation in which an XR video frame corresponds to a protocol data unit (PDU) set;
FIG. 3A illustrates an exemplary technique for changing corresponding CG PUSCH resources and changing a size of transport blocks to be transmitted over multiple CG PUSCH occasions in a period, according to various exemplary embodiments;
FIG. 3B illustrates another exemplary technique for changing corresponding CG PUSCH resources and changing a size of transport blocks to be transmitted over multiple CG PUSCH occasions in a period, according to various exemplary embodiments;
FIG. 4 illustrates an example for modulation coding scheme (MCS) changing rules for multiple CG PUSCH occasions within one period, according to certain exemplary embodiments;
FIG. 5 illustrates an exemplary signal diagram for supporting variable MCS for multiple CG PUSCH occasions within one period, according to some exemplary embodiments;
FIG. 6 illustrates an example of a flow diagram of a method, according to various exemplary embodiments;
FIG. 7 illustrates an example of a flow diagram of another method, according to certain exemplary embodiments; and
FIG. 8 illustrates a set of apparatuses, according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for enhanced UL configured grant for XR applications. Although the devices discussed below and shown in the figures refer to 5G or Next Generation NodeB (gNB) devices, this disclosure is not limited to only gNBs. For example, the following description may also apply to any type of network access node.

Additionally, if desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

NR technology continues to evolve with implementation of immersive reality technologies. Immersive technologies extend the reality experienced by a person by merging a virtual world with the real world or by creating a fully immersive experience. For example, immersive technologies may include augmented reality (AR) in which virtual objects are overlaid on the real world, virtual reality (VR) in which a person is fully immersed in a virtual environment, and mixed reality (MR) in which virtual and real-world objects may interact with each other in real-time. The term extended reality (XR) may be used to refer to all these immersive technologies. In XR, audio and/or video data may need to be transmitted and/or received in periodic or aperiodic occasions.

A consideration in implementing XR systems may be transmissions of configured grant (CG) physical uplink shared channels (PUSCH). XR may require a significant amount of data and may require multiple CG PUSCH transmission occasions with a period of a single CG PUSCH. For example, in an exemplary situation, UL XR frames may be carried through a protocol data unit (PDU) using CG PUSCH resources. In this situation, the data packets may vary in packet size, which may be problematic because resource size and modulation coding scheme (MCS) are fixed once the configuration (UL Type 1 CG) and/or the activation (UL Type 2 CG) is completed.

It is therefore an aim of the 3^{rd} generation partnership project (3GPP) to attempt to optimize efficient usage of multiple CG PUSCH occasions in a period to deliver UL XR data traffic and using uplink control information (UCI) to indicate the unused CG PUSCH occasion(s). For example, the CG-UCI may be extended or a new UCI over CG PUSCH may be defined.

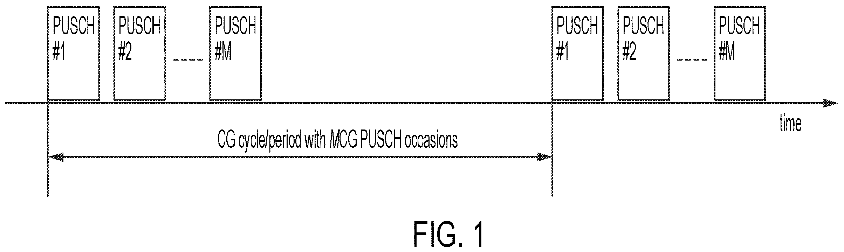

FIG. 1 illustrates an example of multiple CG PUSCH resources/occasions within one CG period. For example, a set of allowed periodicities P may be defined in 3GPP standards. Higher layer parameter cg-nrofSlots may provide the number of consecutive slots allocated within a CG period. The higher layer parameter cg-nrofPUSCH-InSlot may provide the number of consecutive PUSCH allocations within a slot, where the first PUSCH allocation may follow the higher layer parameter timeDomainAllocation for Type 1 PUSCH transmission or the higher layer configuration according to 3GPP standards, a UL grant received on the DCI for Type 2 PUSCH transmissions, and the remaining PUSCH allocations may have the same length and PUSCH mapping type, and may be appended following the previous allocations without any gaps. The same combination of start symbol and length and PUSCH mapping type may repeat over the consecutively allocated slots.

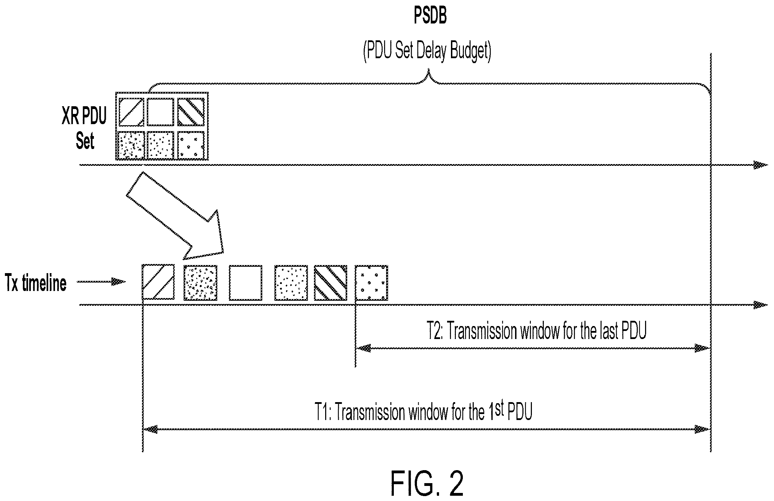

Static or semi-static allocation of modulation coding scheme (MCS) and physical resource blocks (PRBs) over consecutive allocated slots may become a limiting factor for XR services. For example, FIG. 2 illustrates an example of an XR implementation in which an XR video frame corresponds to a PDU set composed of 6 PDUs. Each of the 6 PDUs may be each carried by a different transport block (TB), which may be delivered over a CG PUSCH occasion. Video frame size, channel condition, and/or reduced UE capability may contribute to the availability of a transmission window for different TBs of the same PDU set. As shown in the example of FIG. 2, a transmission window for the first TB in the video frame is longer than the last TB, such that T1>T2.

To simultaneously fulfil any requirements of a PDU set delay budget (PSDB) (as defined in 3GPP 23.700-60) and a reliability, such as, for example, 99.9%, one approach may be to use a robust MCS scheme for all TBs carrying the same PDU set over multiple CG PUSCH. This robust MCS scheme may reduce the overall system efficiency since this approach may not take advantage of possible retransmissions for any earlier scheduled TBs. In another approach in which a less robust MCS scheme may be applied to all TBs, a reliability of the last TB may be reduced significantly and result in dropping of an entire video frame, which would damage the end user experience.

Various exemplary embodiments may provide advantages to resolve issues known in the technology, such as the issues discussed above. For example, certain exemplary embodiments may advantageously provide one or more procedures to more effectively transmit one PDU set to a base station or gNB over multiple CG PUSCH occasions. This may allow the overall system to improve performance by considering spectral efficiency, including control signaling overhead, reliability, and the end user experience.

Certain exemplary embodiments may provide one or more procedures for multiple CG PUSCH transmission occasions in a period of a single CG PUSCH configuration, and a dynamic indication of unused CG PUSCH occasion(s) based on UCI by the UE. By providing more efficient resource usage and XR support, various exemplary embodiments may provide different ways to enable a network entity, such as a base station or gNB, to flexibly configure multiple CG PUSCH occasions with different transmission parameters, for example MCS, within a CG period.

According to various exemplary embodiments, a network entity, such as a gNB or base station, may configure different transmission parameters of multiple CG PUSCH occasions within one CG period. The configuration of different transmission parameters of multiple CG PUSCH occasions within one CG period may be performed within a configuration phase. However, this application is not limited to the configuration procedure(s) occurring in a configuration phase. The transmission parameters that may be configured for multiple CG PUSCH occasions in one CG period may include, for example, various MCS levels or TB sizes.

Some exemplary embodiments discussed herein may, for example, use MCS as a transmission parameter. The exemplary embodiments are not limited to only this example and may additionally or alternatively use TB sizes and/or any other related transmission parameter known in the technology, for example, transmission power, precoding matrix, rank, etc. Taking MCS as an exemplary transmission parameter, some exemplary embodiments may provide at least three techniques for configuring different MCS levels within one CG PUSCH period.

Some exemplary embodiments provide a non-limiting example of a technique(s) for configuring different MCS levels within one CG PUSCH period in which explicit MCS indication may be used. For example, the MCS may be indicated with a 5-bit MCS index to indicate the selected MCS. For each individual CG occasion, there may be a dedicated MCS index indication.

Some exemplary embodiments may provide another non-limiting example of a technique(s) for configuring different MCS levels within one CG PUSCH period in which implicit MCS indication may be used. For example, one MCS scheme may be configured as a baseline or default value that is used at least for the 1st CG PUSCH occasion within one CG period. This is complemented with configuring an additional parameter, which is referred to as an MCS index delta, to indicate the MCS index offset. The MCS index offset may be, for example, a two-level more robust MCS based on MCS table selection from one transmission to another.

In another exemplary embodiment, the baseline or default MCS may be used in any CG PUSCH occasion(s) within one CG period, then the MCS index delta for each individual CG PUSCH occasions may be configured together with the baseline or default MCS value. In certain exemplary embodiments, the index delta may be a relative value (e.g. 2 dB) or an absolute value (e.g. 3 dBm), for example, in a case with the change of transmission power.

The gNB may configure one or more rules to indicate whether to change the MCS. As an example, a rule may be configured for the MCS index delta to be: 000 - no change to the MCS; 001 - only change the last CG PUSCH occasion(s) to use the lower MCS; 010 - decrease the MCS for every CG PUSCH occasions. This application is not limited to these exemplary rules and other rules may also be configured. As another example, the rule may be sent to the UE via downlink control signaling, for example, over downlink control information (DCI) carried by Physical Downlink Control Channel (PDCCH).

As another example of a rule that may be configured, one bit-map may be specified where one bit in the bit-map corresponds to one CG PUSCH occasion in one CG period. The bit-map may be used to indicate whether the MCS applied to the current CG PUSCH occasion may be different as compared to the previous CG PUSCH occasion. For example, a rule for the bit-map may be set to: 0 - no change; 1 - change. In an example in which 6 CG PUSCH occasions may exist within one CG period with the configured bit-map as "000101", a first 3 CG PUSCH occasions may have the same MCS (e.g., the default MCS), and a two levels more robust MCS is applied to both the 4^{th} and the 5^{th} CG PUSCH occasions (e.g., the 4^{th} and 5^{th} CG PUSCH occasions are with the same MCS). For the last (6^{th}) CG PUSCH occasion, the most robust MCS may be used, such as four levels more robust as compared to the default or baseline MCS level. This exemplary rule configuring a bit-map may also be applied together with the first example of the technique(s) for configuring different MCS levels within one CG PUSCH period MCS indication. As another example, the bit-map may be sent to the UE via downlink control signaling, for example, over DCI carried by the PDCCH.

As a further example, a rule may be configured to be a pattern-based rule. For example, the gNB may configure one default MCS, and further have a configured pattern of MCS transition/jump from one TB to another TB. An exemplary pattern may represent a linear decrease of TB size from one CG PUSCH occasion to the following CG PUSCH occasion.

Some exemplary embodiments may provide a further non-limiting example of a technique(s) for configuring different MCS levels within one CG PUSCH period in which function-based MCS selection, such as remaining PSDB-based MCS selection, may be used. For example, the gNB may configure two baseline MCS schemes MCS_1 and MCS_2, where MCS_1 may be set to be more reliable than MCS_2. An MCS for a first TB and MCS for following TBs may be based on the function of the remaining PSDB. For example, the function of the remaining PSDB may be defined as: MCS_index=MCS_1+floor((MCS_2-MCS_1)*(remaining_PSDB / PSDB).

In the event of a change of MCS transmission parameters for multiple CG PUSCH occasions within one CG period, the corresponding CG PUSCH resource or the size of the TBs to be transmitted over multiple CG PUSCH occasions in a period may need to change as well.

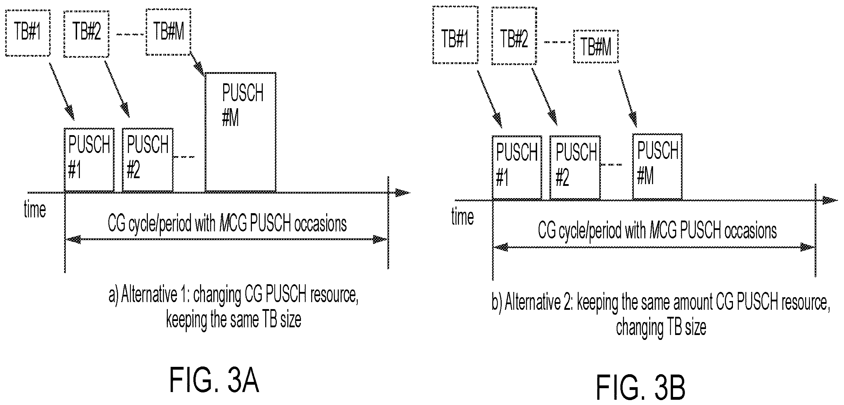

FIGs. 3A and 3B illustrate two exemplary techniques for changing corresponding CG PUSCH resource and changing the size of the TBs to be transmitted over multiple CG PUSCH occasions in a period, according to various exemplary embodiments. FIG. 3A shows an example of a first technique in which the CG PUSCH resource is changed. In this example, the same amount of data to be delivered with each individual CG PUSCH occasion may be maintained. This exemplary technique may be implemented, for example, with the XR PDU set. FIG. 3B shows an example of a second technique in which the CG PUSCH resource is changed. In this example, a size of CG PUSCH resource may be maintained at the same size. The second technique may change an amount of data to be delivered with each individual CG PUSCH occasion as a result of configuring different MCSs for different CG PUSCH occasions.

Various exemplary embodiments may provide using UCI or CG-UCI for reporting unused CG PUSCH occasions within one CG period. The activation and/or deactivation of this reporting unused CG PUSCH occasions may be implemented via radio resource control (RRC) signaling. As a first example, reporting unused CG PUSCH occasions may specify an indication as one optional information element. If the configuration of the UCI is absent, UE may not be required to report unused CG PUSCH occasion(s). As another example, reporting unused CG PUSCH occasions may include an indication at the beginning of the CG period in one or multiple CG PUSCH occasions. For example, when there are 6 CG PUSCH occasions in one period, the UCI used to indicate unused CG PUSCH occasions may be transmitted with the first two CG PUSCH. The gNB may have full control of the configuration, for example, where and how such UCI may be sent.

Although the techniques, procedures, and other examples may refer to uplink transmissions, this application is not limited thereto. Some exemplary embodiments equally apply to downlink (DL) semi-persistent scheduling (SPS).

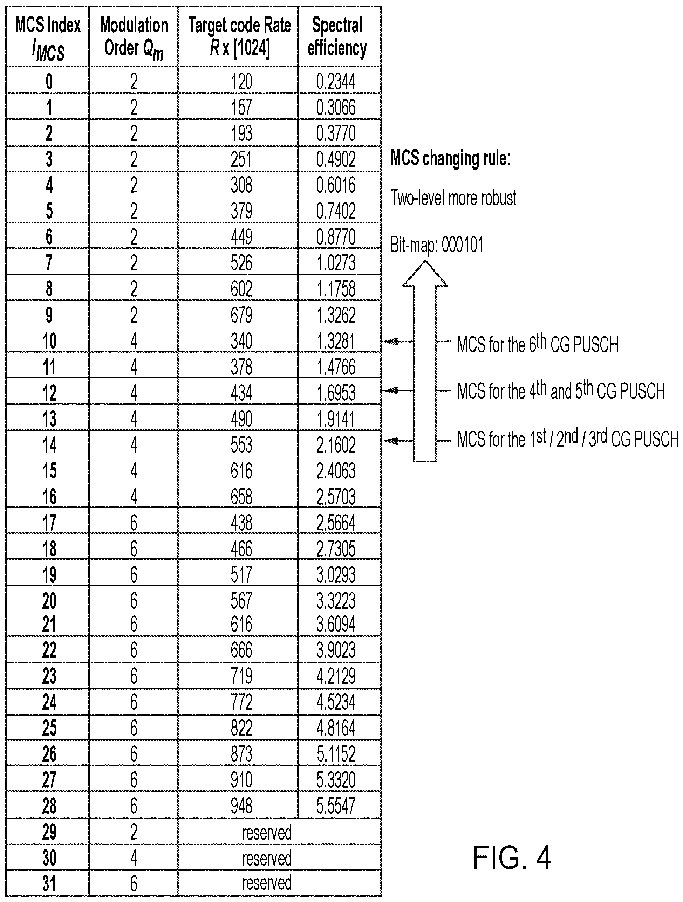

FIG. 4 illustrates an example for MCS changing rules for multiple CG PUSCH occasions within one period, according to various exemplary embodiments. FIG. 4 shows an exemplary configured rule in which two higher level robust MCS may be configured by the gNB and applied by the UE. This example also shows the bit-map for applying MCS change may be 000101 and may be based on the assumption of 6 CG PUSCH occasions within one CG period.

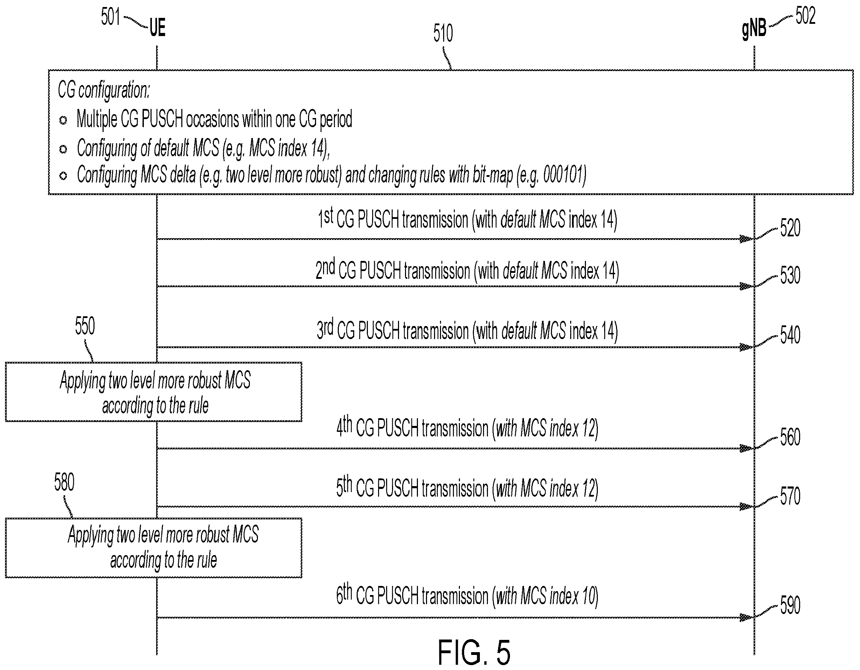

FIG. 5 illustrates an exemplary signal diagram for supporting variable MCS for multiple CG PUSCH occasions within one period, according to various exemplary embodiments. The example of FIG. 5 shows multiple CG PUSCH occasions may be configured within one CG period and with different MCS schemes. At 510, a network entity, such as a gNB 502, may configure a UE, such as UE 501, with multiple CG PUSCH occasions within one CG period. A default MCS, such as MCS index 14, may be configured together with an MCS changing rule. For example, the MCS changing rule may be configured as a combination of MCS delta and a bit-map used for indicating where the MCS change should be applied. In this example, the MCS delta may be two-levels more robust than the current/prior MCS and the bit-map may be 000101.

At 520-540, first, second, and third CG PUSCH transmissions/occasions may occur or be performed from the UE 501, as configured by the gNB 502, to the gNB 502. The first, second, and third CG PUSCH transmissions may be transmitted in parallel or separately (e.g., discontinuously). Each of the first, second, and third CG PUSCH transmissions uses a default MCS, which may be MCS index 14 in this example. However, this example should not be considered limiting and any other suitable MCS index may be used.

At 550, an MCS changing rule may be triggered, which may cause or instruct the UE 501 to apply two level more robust MCS, such as MCS index 12, for the fourth and the fifth CG PUSCH transmissions. At 560, the UE 501 may apply this MCS changing rule for the fourth CG PUSCH transmission. At 570, the UE 501 may similarly apply this MCS changing rule for the fifth CG PUSCH transmission.

At 580, an MCS changing rule may be triggered, which may cause or instruct the UE 501 to apply two level more robust MCS, such as MCS index 10, for the sixth CG PUSCH transmission. At 590, the UE 501 applies the MCS changing rule for the sixth CG PUSCH transmission so that the sixth CG PUSCH transmission is transmitted with MCS index 10.

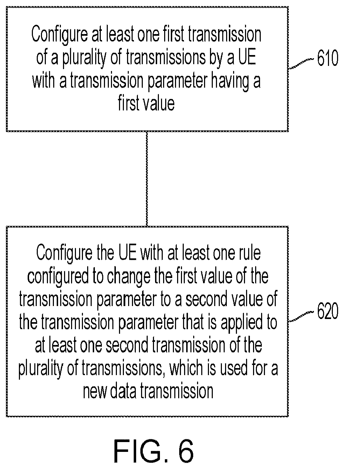

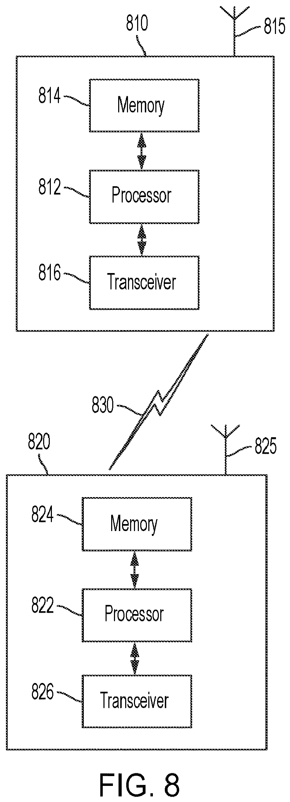

FIG. 6 illustrates an example flow diagram of a method, according to certain exemplary embodiments. In an example embodiment, the method of FIG. 6 may be performed by a network element, or a group of multiple network elements in a 3GPP system, such as LTE or 5G-NR. For instance, in an exemplary embodiment, the method of FIG. 6 may be performed by a network or network entity, such as a base station or gNB, similar to apparatus 810 illustrated in FIG. 8.

According to various exemplary embodiments, the method of FIG. 6 may include, at 610, configuring at least one first transmission of a plurality of transmissions by a UE, similar to apparatus 820, with a transmission parameter having a first value. At 620, the method may also include configuring the UE with at least one rule to change the first value of the transmission parameter to a second value of the transmission parameter that is applied to at least one second transmission of the plurality of transmissions, which is used for new data transmission.

Various exemplary embodiments may also provide that the transmission parameter is an MCS, TB size, transmission power, precoding matrix, or rank, etc. Further, the plurality of transmissions may be CG transmissions, which are transmitted within one configured grant period.

In some exemplary embodiments, the first value of the transmission parameter may be set to be a default value of the MCS, which is applied to transmissions of the plurality of transmissions that occur before the at least one rule is triggered and applied. The at least one rule may include a predetermined or configured bit-map that indicates when the at least one rule is configured to be applied. Further, the first value of the transmission parameter may be a first MCS and the second value of the transmission parameter may be a second MCS, or the at least one rule may include an MCS change value. The MCS change value may indicate a number of levels to increase or decrease from the first value of the MCS to the second value of the MCS.

In various exemplary embodiments, the at least one rule may include a first rule and a second rule. The first rule may change the first value of the transmission parameter to the second value of the transmission parameter for the at least one second transmission. For example, the first rule may change a level of a first MCS to be a higher level for a second MCS. The second rule may change the second value of the transmission parameter to a third value of the transmission parameter, which is configured to be applied to at least one third transmission of the plurality of transmissions after the at least one second transmission. For example, the second rule may change a level of the second MCS to be a higher level for a third MCS, which is configured to be applied to at least one third transmission of the plurality of transmissions after the at least one second transmission. Further, the first value and the second value of the transmission parameter may be determined by an explicit indication, an implicit indication, or a function-based transmission parameter selection.

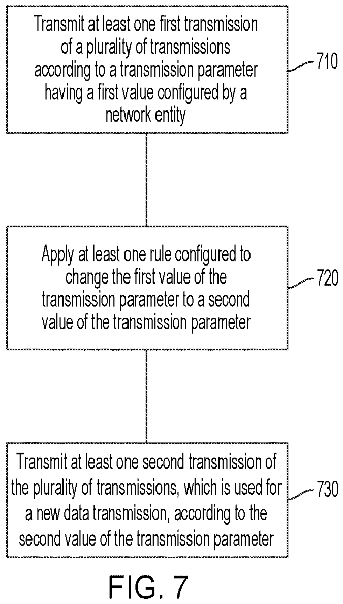

FIG. 7 illustrates an example flow diagram of a method, according to certain exemplary embodiments. In an example embodiment, the method of FIG. 7 may be performed by a network element, or a group of multiple network elements in a 3GPP system, such as LTE or 5G-NR. For instance, in an exemplary embodiment, the method of FIG. 7 may be performed by a network device or user device connected to the network, such as a UE, similar to apparatus 820 illustrated in FIG. 8.

According to various exemplary embodiments, the method of FIG. 7 may include, at 710, transmitting at least one first transmission of a plurality of transmissions according to a transmission parameter having a first value. The transmission parameter may be configured by apparatus 810. At 720, the method may further include applying at least one rule configured to change the first value of the transmission parameter to a second value of the transmission parameter. At 830, the method may also include transmitting at least one second transmission of the plurality of transmissions, which may be used for a new data transmission, according to the second value of the transmission parameter.

In some exemplary embodiments, the transmission parameter may be an MCS, a TB size, transmission power, precoding matrix, or rank, etc. Further, the method may also include transmitting the plurality of transmissions within one CG period, wherein the plurality of transmissions are CG transmissions.

Certain exemplary embodiments may provide that the first value of the transmission parameter may be set to be a default value of the MCS, which is applied to transmissions of the plurality of transmissions that occur before the at least one rule is triggered and applied. The at least one rule may include a predetermined bit-map that indicates when the at least one rule is configured to be applied.

In various exemplary embodiments, the first value of the transmission parameter may be a first MCS and the second value of the transmission parameter may be a second MCS. The at least one rule may include an MCS change value. The MCS change value may indicate a number of levels to increase from the first value of the MCS to the second value of the MCS. The first value and second value of the transmission parameter may be determined by an explicit indication, an implicit indication, and/or a function-based transmission parameter selection.

According to certain exemplary embodiments, the method may include applying a first rule to change the first value of the transmission parameter to the second value of the transmission parameter for the at least one second transmission. The method may also include applying a second rule to change the second value of the transmission parameter to a third value of the transmission parameter, and transmitting at least one third transmission of the plurality of transmissions according to the third value of the transmission parameter after the at least one second transmission.

In various exemplary embodiments, the method may include applying the first rule to change a level of a first MCS to be a higher level for a second MCS. The method may also include applying the second rule to change a level of the second MCS to be a higher level for a third MCS, and transmitting at least one third transmission of the plurality of transmissions according to the third MCS after the at least one second transmission.

FIG. 8 illustrates a set of apparatuses 810 and 820 according to various exemplary embodiments. In the various exemplary embodiments, the apparatus 810 may be a network, network entity, element of the core network, or element in a communications network or associated with such a network, such as a base station, an NE, or a gNB. For example, the gNB 502 according to various exemplary embodiments as discussed above may be an example of apparatus 810. It should be noted that one of ordinary skill in the art would understand that apparatus 810 may include components or features not shown in FIG. 8. In addition, apparatus 820 may be an element in a communications network or associated with such a network, such as a UE, RedCap UE, SL UE, mobile equipment (ME), mobile station, mobile device, stationary device, IoT device, or other device. For example, the UE 501 according to various exemplary embodiments discussed above may be an example of apparatus 820. It should be noted that one of ordinary skill in the art would understand that apparatus 820 may include components or features not shown in FIG. 8.

According to various exemplary embodiments, the apparatus 810 may include at least one processor, and at least one memory, as shown in FIG. 8. The memory may store instructions that, when executed by the processor, cause the apparatus 810 to configure at least one first transmission of a plurality of transmissions by the apparatus 820 with a transmission parameter having a first value, and configure the apparatus 820 with at least one rule configured to change the first value of the transmission parameter to a second value of the transmission parameter that is applied to at least one second transmission of the plurality of transmissions, which is used for a new data transmission.

According to various exemplary embodiments, the apparatus 820 may include at least one processor, and at least one memory, as shown in FIG. 7. The memory may store instructions that, when executed by the processor, cause the apparatus 820 to transmit at least one first transmission of a plurality of transmissions according to a transmission parameter having a first value. The transmission parameter may be configured by the apparatus 810. The apparatus 820 may further be caused to apply at least one rule configured to change the first value of the transmission parameter to a second value of the transmission parameter and transmit at least one second transmission of the plurality of transmissions, which is used for a new data transmission, according to the second value of the transmission parameter.

Various exemplary embodiments described above may provide several technical improvements, enhancements, and/or advantages. For instance, some exemplary embodiments may provide advantages of one or more procedures to more effectively transmit one PDU set to a base station or gNB over multiple CG PUSCH occasions. This may allow the overall system to improve performance by considering spectral efficiency, including control signaling overhead, reliability, and the end user experience.

In some example embodiments, apparatuses 810 and/or 820 may include one or more processors, one or more computer-readable storage medium (for example, memory, storage, or the like), one or more radio access components (for example, a modem, a transceiver, or the like), and/or a user interface. In some example embodiments, apparatuses 810 and/or 820 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 8, apparatuses 810 and/or 820 may include or be coupled to processors 812 and 822, respectively, for processing information and executing instructions or operations. Processors 812 and 822 may be any type of general or specific purpose processor. In fact, processors 812 and 822 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 812 (and 822) for each of apparatuses 810 and/or 820 is shown in FIG. 8, multiple processors may be utilized according to other example embodiments. For example, it should be understood that, in certain example embodiments, apparatuses 810 and/or 820 may include two or more processors that may form a multiprocessor system (for example, in this case processors 812 and 822 may represent a multiprocessor) that may support multiprocessing. According to certain example embodiments, the multiprocessor system may be tightly coupled or loosely coupled to, for example, form a computer cluster).

Processors 812 and 822 may perform functions associated with the operation of apparatuses 810 and/or 820, respectively, including, as some examples, precoding of antenna gain/phase parameters, encoding and decoding of individual bits forming a communication message, formatting of information, and overall control of the apparatuses 810 and/or 820, including processes illustrated in FIGs. 3A-7.

Apparatuses 810 and/or 820 may further include or be coupled to memory 814 and/or 824 (internal or external), respectively, which may be coupled to processors 812 and 822, respectively, for storing information and instructions that may be executed by processors 812 and 822. Memory 814 (and memory 824) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 814 (and memory 824) can be comprised of any combination of random access memory (RAM), read only memory (ROM), static storage such as a magnetic or optical disk, hard disk drive (HDD), or any other type of non-transitory machine or computer readable media. The instructions stored in memory 814 and memory 824 may include program instructions or computer program code that, when executed by processors 812 and 822, enable the apparatuses 810 and/or 820 to perform tasks as described herein.

In certain example embodiments, apparatuses 810 and/or 820 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 812 and 822 and/or apparatuses 810 and/or 820 to perform any of the methods illustrated in FIGs. 3A-7.

In some exemplary embodiments, apparatuses 810 and/or 820 may also include or be coupled to one or more antennas 815 and 825 for receiving a downlink signal and for transmitting via an uplink from apparatus 810 and apparatus 820, respectively. Apparatuses 810 and/or 820 may further include transceivers 816 and 826, respectively, configured to transmit and receive information. The transceiver 816 and 826 may also include a radio interface that may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 816 and 826 may be respectively configured to modulate information on to a carrier waveform for transmission, and demodulate received information for further processing by other elements of apparatuses 810 and/or 820. In other example embodiments, transceivers 816 and 826 may be capable of transmitting and receiving signals or data directly. Additionally or alternatively, in some example embodiments, apparatuses 810 and/or 820 may include an input and/or output device (I/O device). In certain example embodiments, apparatuses 810 and/or 820 may further include a user interface, such as a graphical user interface or touchscreen.

In certain example embodiments, memory 814 and memory 824 store software modules that provide functionality when executed by processors 812 and 822, respectively. The modules may include, for example, an operating system that provides operating system functionality for apparatuses 810 and/or 820. The memory may also store one or more functional modules, such as an application or program, to provide additional functionality for apparatuses 810 and/or 820. The components of apparatuses 810 and/or 820 may be implemented in hardware, or as any suitable combination of hardware and software. According to certain example embodiments, apparatus 810 may optionally be configured to communicate with apparatus 820 via a wireless or wired communications link 830 according to any radio access technology, such as NR.

According to certain example embodiments, processors 812 and 822, and memory 814 and 824 may be included in or may form a part of processing circuitry or control circuitry. In addition, in some example embodiments, transceivers 816 and 826 may be included in or may form a part of transceiving circuitry.

In some exemplary embodiments, an apparatus (e.g., apparatus 810 and/or apparatus 820) may include means for performing a method, a process, or any of the variants discussed herein. Examples of the means may include one or more processors, memory, controllers, transmitters, receivers, and/or computer program code for causing the performance of the operations.

Certain exemplary embodiments may be directed to an apparatus that includes means for performing any of the methods described herein including, for example, means for configuring at least one first transmission of a plurality of transmissions by a user equipment with a transmission parameter having a first value. The apparatus may also include means for configuring the user equipment with at least one rule configured to change the first value of the transmission parameter to a second value of the transmission parameter that is applied to at least one second transmission of the plurality of transmissions, which is used for a new data transmission.

Other exemplary embodiments may be directed to an apparatus that includes means for performing any of the methods described herein including, for example, means for transmitting at least one first transmission of a plurality of transmissions according to a transmission parameter having a first value, wherein the transmission parameter is configured by a network entity. The apparatus may also include means for applying at least one rule configured to change the first value of the transmission parameter to a second value of the transmission parameter, and/or means for transmitting at least one second transmission of the plurality of transmissions, which is used for a new data transmission, according to the second value of the transmission parameter.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 810 and/or 820) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 810 and/or 820), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- AR: Augmented Reality
- CE: Control Element
- CG: Configured Grant
- CG-UCI: Configured Grant Uplink Control Information
- CSI: Channel State Information
- DCI: Downlink Control Information
- DL: Downlink
- EMBB: Enhanced Mobile Broadband

- gNB: 5G or Next Generation NodeB
- HARQ: Hybrid Automatic Repeat Request
- IOT: Internet of Things
- LTE: Long Term Evolution
- MAC: Medium Access Control
- MAC CE: MAC Control Element
- MCS: Modulation Coding Scheme
- NR: New Radio
- PDB: Packet Delay Budget
- PDCCH: Physical Downlink Control Channel
- PDSCH: Physical Downlink Shared Channel
- PDU: Protocol Data Unit
- PSDB: Packet Set Delay Budget
- PUSCH: Physical Uplink Shared Channel
- RAN: Radio Access Network
- RedCap: Reduced Capability
- RRC: Radio Resource Control
- TB: Transport Block
- UCI: Uplink Control Information
- UE: User Equipment
- UL: Uplink
- URLLC: Ultra Reliable Low Latency Communication
- VR: Virtual Reality
- XR: Extended Reality

## Claims

1. An apparatus comprising:
means for configuring at least one first transmission of a plurality of transmissions by a user equipment with a transmission parameter having a first value; and
means for configuring the user equipment with at least one rule configured to change the first value of the transmission parameter to a second value of the transmission parameter that is applied to at least one second transmission of the plurality of transmissions, which is used for a new data transmission.

2. The apparatus according to claim 1, wherein the transmission parameter is a modulation coding scheme, transport block size, transmission power, precoding matrix, or rank.

3. The apparatus according to claim 1 or 2, wherein the plurality of transmissions are configured grant transmissions, which are transmitted within one configured grant period.

4. The apparatus according to any one of claims 1-3, wherein:
the first value of the transmission parameter is a first modulation coding scheme and the second value of the transmission parameter is a second modulation coding scheme; or
the at least one rule comprises a modulation coding scheme change value, wherein the modulation coding scheme change value indicates a number of levels to increase or decrease from the first value of the modulation coding scheme to the second value of the modulation coding scheme.

5. The apparatus according to any one of claims 1-3, wherein:
the at least one rule comprises a first rule and a second rule;
the first rule is configured to change the first value of the transmission parameter to the second value of the transmission parameter for the at least one second transmission; and
the second rule is configured to change the second value of the transmission parameter to a third value of the transmission parameter, which is configured to be applied to at least one third transmission of the plurality of transmissions after the at least one second transmission.

6. An apparatus comprising:
means for transmitting at least one first transmission of a plurality of transmissions according to a transmission parameter having a first value, wherein the transmission parameter is configured by a network entity;
means for applying at least one rule configured to change the first value of the transmission parameter to a second value of the transmission parameter; and
means for transmitting at least one second transmission of the plurality of transmissions, which is used for a new data transmission, according to the second value of the transmission parameter.

7. The apparatus according to claim 6, further comprising:
means for transmitting the plurality of transmissions within one configured grant period, wherein the plurality of transmissions are configured grant transmissions.

8. The apparatus according to claim 6 or 7, wherein the first value of the transmission parameter is set to be a default value, which is applied to transmissions of the plurality of transmissions that occur before the at least one rule is triggered and applied.

9. The apparatus according to any one of claims 6-8, wherein the at least one rule comprises a predetermined bit-map that indicates when the at least one rule is configured to be applied.

10. The apparatus according to any one of claims 6-9, wherein:
the first value of the transmission parameter is a first modulation coding scheme and the second value of the transmission parameter is a second modulation coding scheme; or
the at least one rule comprises a modulation coding scheme change value, wherein the modulation coding scheme change value indicates a number of levels to increase or decrease from the first value of the modulation coding scheme to the second value of the modulation coding scheme.

11. The apparatus according to any one of claims 6-9, wherein:
the at least one rule comprises a first rule and a second rule; and
the apparatus further comprising:
means for applying the first rule to change the first value of the transmission parameter to the second value of the transmission parameter for the at least one second transmission, and
means for applying the second rule to change the second value of the transmission parameter to a third value of the transmission parameter, and transmit at least one third transmission of the plurality of transmissions according to the third value of the transmission parameter after the at least one second transmission.

12. The apparatus according to any one of claims 6-9, wherein:
the transmission parameter is a modulation coding scheme;
the at least one rule comprises a first rule and a second rule; and
the apparatus further comprising:
means for applying the first rule to change a level of a first modulation coding scheme to be a higher level for a second modulation coding scheme, and
means for applying the second rule to change a level of the second modulation coding scheme to be a higher level for a third modulation coding scheme and transmit at least one third transmission of the plurality of transmissions according to the third modulation coding scheme after the at least one second transmission.

13. The apparatus according to any one of claims 6-12, wherein:
the first value and second value of the transmission parameter is determined by an explicit indication, an implicit indication, or a function-based transmission parameter selection.

14. A method for a network entity comprising:
configuring at least one first transmission of a plurality of transmissions by a user equipment with a transmission parameter having a first value; and
configuring the user equipment with at least one rule configured to change the first value of the transmission parameter to a second value of the transmission parameter that is applied to at least one second transmission of the plurality of transmissions, which is used for a new data transmission.

15. A method for a user equipment comprising:
transmitting at least one first transmission of a plurality of transmissions according to a transmission parameter having a first value, wherein the transmission parameter is configured by a network entity;
applying at least one rule configured to change the first value of the transmission parameter to a second value of the transmission parameter; and
transmitting at least one second transmission of the plurality of transmissions, which is used for a new data transmission, according to the second value of the transmission parameter.
